# EUROPÄISCHE PATENTANMELDUNG

(11) **EP 4 528 947 A1**
(43) Veröffentlichungstag der Anmeldung: **26.03.2025**
(21) Anmeldenummer: 23198409.7
(22) Anmeldetag: 19.09.2023
(51) Int. Cl.: H02B 1/28, A62C 3/16, H02B 1/56, H05K 5/02

(54) **NOTBELEUCHTUNGS- UND/ODER SICHERHEITSBELEUCHTUNGSANLAGE UND EINRICHTUNG FÜR DIESE NOTBELEUCHTUNGS- UND/ODER SICHERHEITSBELEUCHTUNGSANLAGE**

(71) Anmelder: DIN-Dietmar Nocker Facilitymanagement GmbH, 4030 Linz (AT)
(72) Erfinder:
(74) Vertreter: Jell, Friedrich

(57) **Zusammenfassung**

Es wird eine Notbeleuchtungs- und/oder Sicherheitsbeleuchtungsanlage (100) und eine Einrichtung für diese Notbeleuchtungs- und/oder Sicherheitsbeleuchtungsanlage (100) gezeigt. Um die Standfestigkeit der Einrichtung (1) zu verbessern, wird vorgeschlagen, dass die Baugruppe (3) zumindest einen Temperatursensor (10) aufweist, dessen temperatursensitiver Aufnehmer (10a) in der Luftströmung der Zuluft (7) zwischen Lufteintrittsöffnung (6) und Netzteilbaugruppe (4) vorgesehen ist.

## Beschreibung

Die Erfindung betrifft eine Notbeleuchtungs- und/oder Sicherheitsbeleuchtungsanlage und eine Einrichtung für die Notbeleuchtungs- und/oder Sicherheitsbeleuchtungsanlage, mit einer elektronischen Baugruppe zur elektrischen Versorgung und/oder Steuerung von zumindest einer Sicherheits- und/oder Rettungszeichenleuchte der Notbeleuchtungs- und/oder Sicherheitsbeleuchtungsanlage, mit einer Netzteilbaugruppe, die Verlustwärme abgibt und zur Netzspannungsversorgung der Baugruppe vorgesehen ist, und mit einem Brandschutzschrank, der einen brandgeschützten Innenraum mit der Steuerungs- und Netzteilbaugruppe, und der an dessen Außenseite zumindest eine Lufteintrittsöffnung für Zuluft zur Netzteilbaugruppe sowie an dessen Außenseite zumindest eine Luftaustrittsöffnung für Abluft von der Netzteilbaugruppe aufweist.

Um bei einer Einrichtung für eine Notbeleuchtungs- und/oder Sicherheitsbeleuchtungsanlage Brandbeständigkeit erfüllen zu können, ist bekannt, die Komponenten der Einrichtung in einem Brandschutzschrank vorzusehen. Beispielsweise werden davon eine elektronische Baugruppe, die zur elektrischen Versorgung und/oder Steuerung von zumindest einer Sicherheits- und/oder Rettungszeichenleuchte der Notbeleuchtungs- und/oder Sicherheitsbeleuchtungsanlage vorgesehen ist, und eine Netzteilbaugruppe, die für die Netzspannungsversorgung zuständig sind, in einen durch brandbeständige Wände abgeschotteten Innenbereich des Brandschutzschranks vorgesehen. Die Verlustwärme der Netzspannungsversorgung wird aus dem Innenbereich über einen Luftstrom abgeführt, der als Zuluft durch eine Lufteintrittsöffnung und als Abluft durch eine Luftaustrittsöffnung des Brandschutzschranks die Netzspannungsversorgung kühlt. Trotz der Abschottung des Innenbereichs des Brandschutzschranks besteht die Gefahr, dass hohe Lufttemperaturen der Zuluft die Betriebssicherheit der Netzspannungsversorgung im Brandfall gefährden. Dies kann zu unerwünschten Zuständen in der Netzspannungsversorgung führen und damit trotz einer zur Verfügung stehenden Notstromversorgung ein Fehlverhalten der Baugruppe und damit der Notbeleuchtungsanlage nicht ausschließen.

Die Erfindung hat sich daher die Aufgabe gestellt, die Betriebssicherheit einer Einrichtung weiter zu erhöhen.

Die Erfindung löst die gestellte Aufgabe durch die Merkmale des Anspruchs 1.

Weist die Baugruppe zumindest einen Temperatursensor auf, dessen temperatursensitiver Aufnehmer in der Luftströmung der Zuluft zwischen Lufteintrittsöffnung und Netzteilbaugruppe vorgesehen ist, kann bereits vor einer Instabilität der Netzteilbaugruppe, verursacht durch erhöhte Zulufttemperaturen, von der Baugruppe reagiert werden. Beispielsweise kann die Baugruppe von der Netzstromversorgung auf eine Notstromversorgung umschalten, was unerwünschten Zuständen in der Netzspannungsversorgung von der Baugruppe fernhält. Dies erhöht erheblich die Standfestigkeit und Betriebssicherheit der Einrichtung.

Vorzugsweise weist der Brandschutzschrank zum Führen der Zuluft und der Abluft einen Lüftungskanal auf, der an die Lufteintrittsöffnung und an die Luftaustrittsöffnung des Brandschutzschranks anschließt, was die Kühlung der Netzteilbaugruppe weiter verbessern kann.

Beispielsweise kann die Reaktionsschnelligkeit im Erfassen von Unregelmäßigkeiten in der Zulufttemperatur weiter verbessert werden, wenn der Aufnehmer im Lüftungskanal vorgesehen ist. Vorzugsweise ist der Aufnehmer an einer Eintrittsöffnung des Lüftungskanals in den Innenraum vorgesehen.

Insbesondere kann der Aufnehmer im Innenraum, und zwar zwischen der Eintrittsöffnung und der Netzteilbaugruppe vorgesehen sein.

Vorzugsweise weist der Brandschutzschrank einen Außenkorpus und einen den Innenbereich begrenzenden Innenkorpus auf, der im Außenkorpus vorgesehen ist.

Dies kann beispielsweise die Brandbeständigkeit des Brandschutzschranks weiter erhöhen. Vorzugsweise sind Außenkorpus und/oder Innenkorpus brandschutzhemmend ausgebildet.

Beispielsweise verläuft der Lüftungskanal zwischen Außenkorpus und Innenkorpus, was die Konstruktion des Brandschutzschranks weiter vereinfachen kann. Dies umso mehr, wenn der Außenkorpus und Innenkorpus zumindest abschnittsweise den Lüftungskanal ausbilden.

Die Standfestigkeit der Einrichtung kann weiter verbessert werden, wenn der Brandschutzschrank eine Brandschutzeinrichtung zur Abschottung des Innenbereichs von Zuluft und Abluft aufweist. Damit können beispielsweise bei einem Brand die Komponenten im Brandschutzschrank verbessert geschützt werden. Beispielsweise ist eine Brandschutzklappe hierzu vorstellbar.

Vorzugsweise weist die Einrichtung eine Batteriebaugruppe auf, wobei die Baugruppe mit der Netzteilbaugruppe zur Netzstromversorgung und mit der Batteriebaugruppe zur Notstromversorgung elektrisch verbunden ist. Damit kann der Brandschutzschrank autark als Zentrale für die Steuerung/Regelung der Einrichtung dienen.

Vorstellbar ist, dass der Innenraum des Brandschutzschranks mehreren voneinander durch Wände abgeschottete Innenbereiche aufweist, wovon der erste Innenbereich die Netzteilbaugruppe und der zweite Innenbereich die Baugruppe aufweist. Damit kann beispielsweise die Baugruppe auch thermisch von der Netzteilbaugruppe getrennt werden, was die Standfestigkeit der Einrichtung weiter verbessern kann.

Beispielsweise bilden brandhemmende Brandschutzplatten die Wände im Innenraum aus, was die Brandbeständigkeit des Brandschutzschranks und damit dessen Standfestigkeit weiter erhöhen kann.

Vorstehendes kann beispielsweise weiter verbessert werden, wenn der dritte Innenbereich die Batteriebaugruppe aufweist.

Vorzugsweise ragt der Temperatursensor, insbesondere mit zwei an den Aufnehmer angeschlossene elektrische Leiter, durch eine Wandöffnung der Wand zwischen ersten und zweiten Innenbereich. Mit solch einer Leitungsführung des Temperatursensors kann beispielsweise der Montageaufwand am Brandschutzschrank verringert werden. Vorzugsweise ist diese Wandöffnung brandschutzhemmend verschlossenen.

Vorzugsweise schaltet die Baugruppe in Abhängigkeit der vom Temperatursensor erfassten Temperatur der Zuluft von der Netzstromversorgung auf die Batteriestromversorgung um. Dies stellt einen sicheren Betrieb der Einrichtung sicher.

Zusätzlich oder alternativ unterbricht die Steuereinrichtung in Abhängigkeit der vom Sensor erfassten Temperatur der Zuluft die Ladeversorgung zumindest einer Batterie der Batteriestromversorgung, was die Sicherheit der Notstromversorgung weiter erhöhen kann.

Dabei kann vorteilhaft sein, wenn die Baugruppe ausgebildet ist, aus den Messdaten des Temperatursensors einen zeitlichen Temperaturverlauf zu bestimmen. Damit kann das Unterbrechen und/oder Umschalten durch die Baugruppe erfolgen, wenn eine Steigung des Temperaturverlaufs von mehr als 0,5 K pro Minute eintritt. Damit kann die Baugruppe schnell und/oder fehlerfrei reagieren, um unerwünschte Zustände an der Netzspannungsversorgung zu vermeiden. Vorstellbar zur weiteren Verbesserung ist zudem, dass das Unterbrechen und/oder Umschalten durch die Baugruppe erfolgt, wenn eine Steigung des Temperaturverlaufs von mehr als 5, 10 oder 80 Kelvin pro Minute eintritt.

Die die Einrichtung kann beispielsweise selbst nach einem Brandfall handhabungsfreundlich wiederhergestellt werden, wenn die Baugruppe eine von der Baugruppe lösbare Steckkarte mit einer Auswerteeinheit aufweist, die mit dem Temperatursensor zur Messdatenerfassung elektrisch verbunden ist. Auch kann sich durch diesen modulartigen Aufbau der Baugruppe neben einer höheren Flexibilität und Anpassungsfähigkeit in Bezug auf den Sensor und/oder dessen Auswertung auch deren Standfestigkeit weiter erhöhen.

Vorzugsweise findet die erfindungsgemäße Einrichtung bei einer Notbeleuchtungs- und/oder Sicherheitsbeleuchtungsanlage Verwendung. Diese Notbeleuchtungs- und/oder Sicherheitsbeleuchtungsanlage weist zumindest eine, insbesondere mehrere, Sicherheits- und/oder Rettungszeichenleuchte auf, die an die Baugruppe, insbesondere an zumindest eine Endstromkreisbaugruppe der Baugruppe, elektrisch angeschlossen sind.

In den Figuren ist beispielsweise der Erfindungsgegenstand anhand eines Ausführungsbeispiels näher dargestellt. Es zeigen
- Fig. 1: eine Frontansicht auf eine teilweise dargestellte Einrichtung einer Notbeleuchtungs- und/oder Sicherheitsbeleuchtungsanlage und
- Fig. 2: eine vergrößerte Schnittansicht nach II-II der Fig. 1.

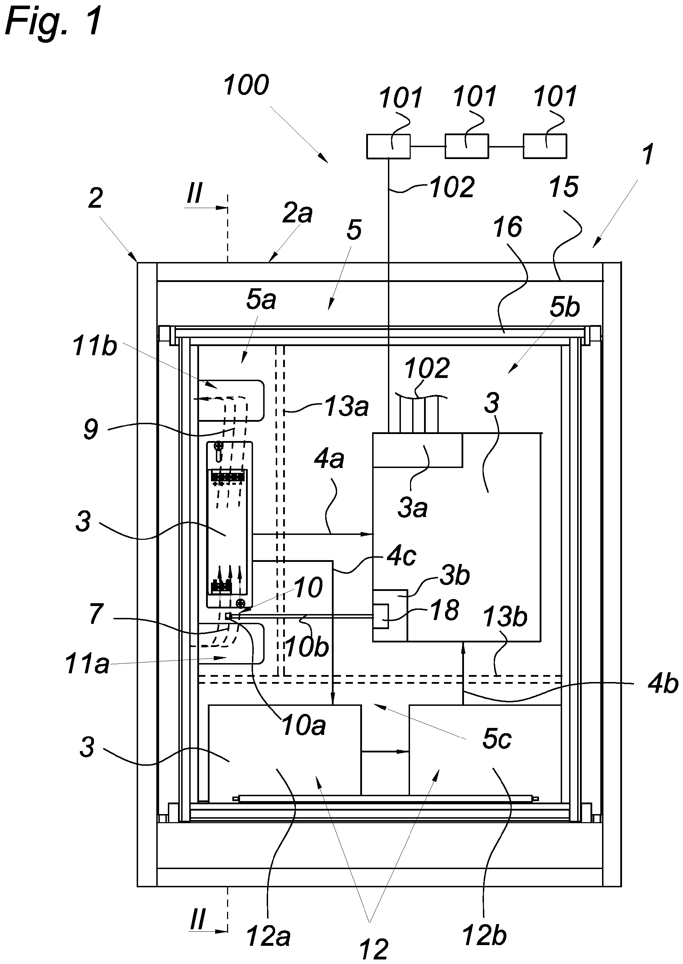

Nach Fig. 1 ist eine Einrichtung 1 mit einem Brandschutzschrank 2 dargestellt, die mehrere Komponenten aufnimmt. So sind im brandgeschützten Innenraum 5 des Brandschutzschranks 2 eine elektronische Baugruppe 3 der Einrichtung 1 und eine Netzteilbaugruppe 4 der Einrichtung 1 vorgesehen.

Die elektronische Baugruppe 3 dient zur elektrischen Versorgung und/oder Steuerung von drei Sicherheits- und/oder Rettungszeichenleuchte 101 der Notbeleuchtungs- und/oder Sicherheitsbeleuchtungsanlage 100.

Die Netzteilbaugruppe 4, die Verlustwärme abgibt, ist zur Netzspannungsversorgung 4a der Baugruppe 3 vorgesehen. Um diese Verlustwärme abzuführen, weist der Brandschutzschrank 2 zum Innenraum 5 hin an seiner Außenseite 2a eine Lufteintrittsöffnung 6 für Zuluft 7 zur Netzteilbaugruppe 4 sowie an seiner Außenseite 2a eine Luftaustrittsöffnung 8 für Abluft 9 von der Netzteilbaugruppe 4 auf. Über die Lufteintrittsöffnung 6 und Luftaustrittsöffnung 8 ist der Brandschutzschrank 2 mit der Außenluft verbunden, was im Brandfall zu einer stark ansteigenden Temperatur in der Zuluft 7 führen kann. Ein unkontrolliertes Verhalten der Netzteilbaugruppe 4 kann sich damit ausbilden.

Erfindungsgemäß werden diese drohenden Unregelmäßigkeiten, beispielsweise in der Kühlung, der Netzteilbaugruppe 4 erfasst, in dem die Baugruppe 3 einen Temperatursensor 10 aufweist, dessen temperatursensitiver Aufnehmer 10a in Luftströmung der Zuluft 7 zwischen Lufteintrittsöffnung 6 und Netzteilbaugruppe 4 vorgesehen ist - wie dies in den Figuren 1 bis 2 zu erkennen ist.

Beispielsweise kann sich damit die Baugruppe 3 in Abhängigkeit, der vom Temperatursensor 10 erfassten Temperaturverlauf der Zuluft 7, von der Netzspannungsversorgung 4a der Netzteilbaugruppe 4 trennen und/oder auf eine alternative Stromversorgung umschalten.

Die Luftführung erfolgt kontrolliert, wofür der Brandschutzschrank 2 einen zwischen Lufteintrittsöffnung 6 und Luftaustrittsöffnung 8 verlaufenden Lüftungskanal 11 zum Führen der Zuluft 7 und Abluft 9 aufweist.

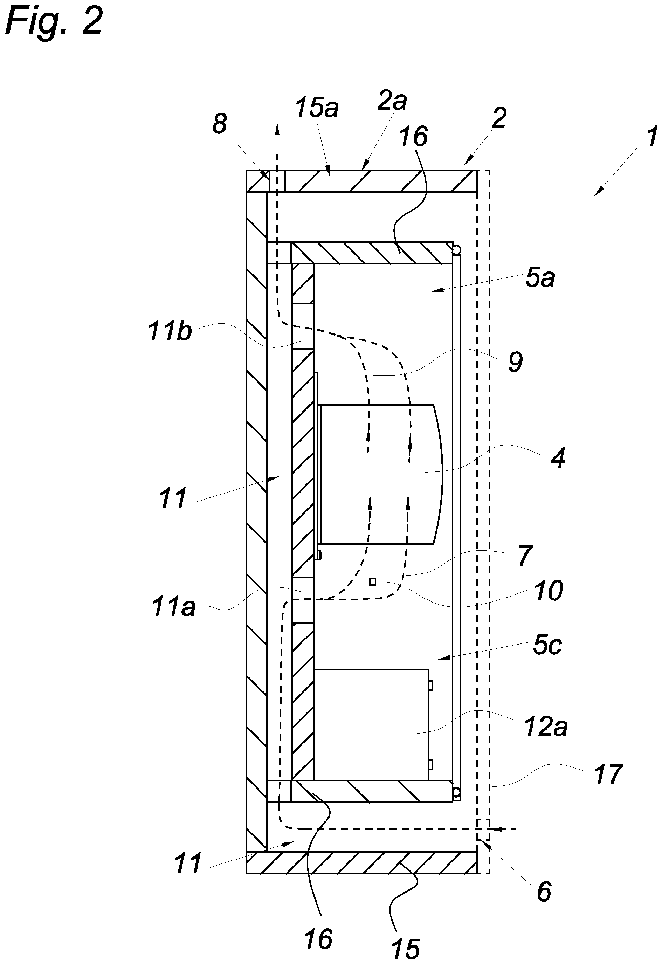

Ausreichend hohe Sensitivität am Temperatursensor 10 wird erreicht, indem der Temperatursensor 10 nach einer Eintrittsöffnung 11a des Lüftungskanals 11 in den Innenraum 5 vorgesehen ist. Wie in Fig. 2 zu erkennen, weist dieser Lüftungskanal 11 neben der Eintrittsöffnung 11a für die Zuluft 7 auch eine Austrittsöffnung 11b aus dem Innenraum 5 für die Abluft 9 auf.

Vorstellbar ist, dass der Temperatursensor 10 im Lüftungskanal 11 oder im Bereich der Eintrittsöffnung 11a des Lüftungskanals 11 zum Innenraum 5 hin in der Strömung der Zuluft 7 vorgesehen ist, was nicht näher dargestellt worden ist.

Wie in der Fig. 1 und 2 zu erkennen, weist die Einrichtung 1 einer Batteriebaugruppe 12 mit zwei in Serie geschalteten Batterien 12a, 12b auf. Die Baugruppe 3 ist mit der Netzteilbaugruppe 4 zur Netzspannungsversorgung 4a und mit der Batteriebaugruppe 12 zur Notspannungsversorgung 4b elektrisch verbunden.

Die Baugruppe 3 kann damit auf die Notstromversorgung 11a als eine alternative Stromversorgung umschalten. Dieses Umschalten von der Netzspannungsversorgung 4a auf die Batteriespannungsversorgung 4b erfolgt von der Baugruppe 3 in Abhängigkeit der vom Temperatursensor 10 erfassten Temperatur der Zuluft 7. Gleichzeitig unterbricht in diesem Fall die Baugruppe 3 die Ladeversorgung 4c der beiden Batterien 12a, 12b der Batteriebaugruppe 12.

Diese Maßnahmen erfolgen äußerst zuverlässig, da die Baugruppe 3 ausgebildet ist, aus den Messdaten des Temperatursensors 10 einen zeitlichen Temperaturverlauf zu berechnen. Wird eine Steigung des Temperaturverlaufs von mehr als 0,5 K pro Minute festgestellt, dann findet dieses beschriebene Unterbrechen und/oder Umschalten durch die Baugruppe 3 statt.

Der Innenraum 5 des Brandschutzschranks 2 ist in mehrere Innenbereiche 5a, 5b, 5c aufgeteilt, indem der Innenraum 5 des Brandschutzschranks 2 mehrere, in Fig. 1 strichliert dargestellte, Wände 13a, 13b aufweist, womit die Innenbereiche 5a, 5b, 5c voneinander abgeschottet sind. Die optionalen Wände 13a, 13b sind mit brandhemmende Brandschutzplatten ausgeführt. Im ersten Innenbereich 5a ist die Netzteilbaugruppe 4, im zweiten Innenbereich 5c ist die Baugruppe 3 und im dritten Innenbereich ist die Batteriebaugruppe 12 vorgesehen.

Der Temperatursensor 10 ragt mit zwei an den Aufnehmer 10a angeschlossene elektrische Leiter 10b, durch eine brandschutzhemmend verschlossene Wandöffnung 14 der in Fig. 1 strichliert dargestellten Wand 13a zwischen dem ersten und zweiten Innenbereich 5a, 5b. Damit wird ein Überschlag eines Brands vom Innenbereich 5a auf den Innenbereich 5b verhindert.

Die Brandbeständigkeit wird deutlich erhöht, indem der Brandschutzschrank 2 einen Außenkorpus 15 und einen Innenkorpus 16 mit dem Innenbereich 5 aufweist. Dieser Innenkorpus weist die Eintrittsöffnung 11a und die Austrittsöffnung 11b des Lüftungskanals 11 auf.

Außerdem weist der Brandschutzschrank 2 eine zu öffnende Fronttür 17 auf, an der die Lufteintrittsöffnung 6 für Zuluft 7 vorgesehen ist, und zwar im unteren Drittel der Fronttür 17. Die Luftaustrittsöffnung 8 für Abluft 9 ist am Außenkorpus 15 vorgesehen, und zwar beispielsweise am Deckel 15a des Außenkorpus 15, wie in Fig. 2 zu erkennen.

Die drei, in Fig.1 beispielsweise dargestellten, Sicherheits- und/oder Rettungszeichenleuchten 101 sind alle an einem gemeinsamen Endstromkreis 102 der Vielzahl an Endstromkreise 102 angeschossen. Hierzu weist die Baugruppe 3 eine Endstromkreisbaugruppe 3a auf.

Die Sicherheits- und/oder Rettungszeichenleuchten 101 werden über die Endstromkreisbaugruppe 3a mit elektrischer Energie versorgt und eventuell auch angesteuert. Der Endstromkreis 102 kann nämlich auch zur Datenkommunikation verwendet werden.

Die elektrische Energie wird, wie vorstehend beschrieben, von der Netzteilbaugruppe 4 zur Netzspannungsversorgung 4a oder von der Batteriebaugruppe 12 zur Notspannungsversorgung 4b zur Verfügung gestellt.

Da nicht ausgeschlossen werden kann, dass sich im Brandfall die Baugruppe 3 über die zwei elektrischen Leitungen 10b des Temperatursensors 10 elektrisch und/oder thermisch beschädigt wird, ist die Baugruppe 3 modulartig aufgebaut. So weist die Baugruppe 3 eine von der Baugruppe 3 lösbare Steckkarte 3b mit einer Auswerteeinheit 18 auf, die mit dem Temperatursensor 10 zur Messdatenerfassung elektrisch verbunden ist. Mit einem Austauschen einer beschädigten Steckkarte 3b kann damit die Baugruppe 3 instandgesetzt werden. Auch weist die Baugruppe 3 durch diesen modulartigen Aufbau eine höhere Flexibilität und Anpassungsfähigkeit in Bezug auf den Sensor auf.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Einrichtung (1) für eine Notbeleuchtungs- und/oder Sicherheitsbeleuchtungsanlage (100), mit einer elektronischen Baugruppe (3) zur elektrischen Versorgung und/oder Steuerung von zumindest einer Sicherheits- und/oder Rettungszeichenleuchte (101) der Notbeleuchtungs- und/oder Sicherheitsbeleuchtungsanlage (100), mit einer Netzteilbaugruppe (4), die Verlustwärme abgibt und zur Netzspannungsversorgung (4a) der Baugruppe (3) vorgesehen ist, und mit einem Brandschutzschrank (2), der einen brandgeschützten Innenraum (5) mit der Steuerungs- (3) und Netzteilbaugruppe (4), und der an dessen Außenseite (2a) zumindest eine Lufteintrittsöffnung (6) für Zuluft (7) zur Netzteilbaugruppe (4) sowie an dessen Außenseite (2a) zumindest eine Luftaustrittsöffnung (8) für Abluft (9) von der Netzteilbaugruppe (4) aufweist, **dadurch gekennzeichnet, dass** die Baugruppe (3) zumindest einen Temperatursensor (10) aufweist, dessen temperatursensitiver Aufnehmer (10a) in der Luftströmung der Zuluft (7) zwischen Lufteintrittsöffnung (6) und Netzteilbaugruppe (4) vorgesehen ist.

2. Einrichtung nach Anspruch 1, **dadurch gekennzeichnet, dass** der Brandschutzschrank (2) zum Führen der Zuluft (7) und der Abluft (9) einen Lüftungskanal (11) aufweist, der an die Lufteintrittsöffnung (6) und an die Luftaustrittsöffnung (8) des Brandschutzschranks (2) anschließt.

3. Einrichtung nach Anspruch 2, **dadurch gekennzeichnet, dass** der Aufnehmer (10a) im Lüftungskanal (11), insbesondere in einer Eintrittsöffnung (11a) des Lüftungskanals (11) in den Innenraum (5), und/oder im Innenraum (5) zwischen der Eintrittsöffnung (11a) und der Netzteilbaugruppe (4) vorgesehen ist.

4. Einrichtung nach einem der Ansprüche 1 bis 3, **dadurch gekennzeichnet, dass** der Brandschutzschrank (2) einen Außenkorpus (15) und einen den Innenbereich (5) begrenzenden Innenkorpus (16) aufweist, der im Außenkorpus (15) vorgesehen ist.

5. Einrichtung nach Anspruch 4, **dadurch gekennzeichnet, dass** der Lüftungskanal (11) zwischen Außenkorpus (15) und Innenkorpus (16) verläuft, insbesondere von diesen zumindest abschnittsweise ausgebildet wird.

6. Einrichtung nach Anspruch 4 oder 5, **dadurch gekennzeichnet, dass** der Innenkorpus (16) die Eintrittsöffnung (11a) des Lüftungskanals (11) in den Innenraum (5) für die Zuluft (7) und/oder eine Austrittsöffnung in den Lüftungskanal (11) für die Abluft (8) aufweist.

7. Einrichtung nach einem der Ansprüche 1 bis 6, **dadurch gekennzeichnet, dass** der Brandschutzschrank (2) eine Brandschutzeinrichtung, insbesondere eine Brandschutzklappe, zur Abschottung des Innenbereichs von Zuluft (7) und Abluft (9) aufweist.

8. Einrichtung nach einem der Ansprüche 1 bis 7, **dadurch gekennzeichnet, dass** die Einrichtung (1) eine Batteriebaugruppe (12) aufweist, und dass die Baugruppe (3) mit der Netzteilbaugruppe (4) zu deren Netzstromversorgung und mit der Batteriebaugruppe (12) zu deren Notstromversorgung (3a) elektrisch verbunden ist.

9. Einrichtung nach einem der Ansprüche 1 bis 8, **dadurch gekennzeichnet, dass** der Innenraum (5) des Brandschutzschranks (2) mehreren voneinander durch Wände (13a, 13b), insbesondere aus brandhemmende Brandschutzplatten, abgeschottete Innenbereiche (5a, 5b, 5c) aufweist, wovon der erste Innenbereich (5a) die Netzteilbaugruppe (4) und der zweite Innenbereich (5b) die Baugruppe (3) aufweist.

10. Einrichtung nach Anspruch 9, **dadurch gekennzeichnet, dass** der dritte Innenbereich (5c) die Batteriebaugruppe (12) aufweist.

11. Einrichtung nach einem der Ansprüche 9 bis 10, **dadurch gekennzeichnet, dass** der Temperatursensor (10) mit einem, insbesondere zwei, an den Aufnehmer (10a) angeschlossenen elektrischen Leiter (10b), durch eine, insbesondere brandschutzhemmend verschlossene, Wandöffnung der Wand (13a) zwischen ersten und zweiten Innenbereich ragt.

12. Einrichtung nach einem der Ansprüche 1 bis 11, **dadurch gekennzeichnet, dass** die Baugruppe (3) in Abhängigkeit der vom Temperatursensor (10) erfassten Temperatur der Zuluft (7) von der Netzspannungsversorgung (4a) auf die Batteriespannungsversorgung (4b) umschaltet und/oder eine Ladeversorgung zumindest einer Batterie (12a, 12b) der Batteriebaugruppe (12) unterbrochen wird.

13. Einrichtung nach Anspruch 12, **dadurch gekennzeichnet, dass** die Baugruppe (3) ausgebildet ist, aus den Messdaten des Temperatursensors (10) einen zeitlichen Temperaturverlauf zu bestimmen und dass das Unterbrechen und/oder Umschalten durch die Baugruppe (3) bei einer Steigung des Temperaturverlaufs von mehr als 0,5, 5, 10 oder 80 Kelvin pro Minute erfolgt.

14. Einrichtung nach einem der Ansprüche 1 bis 13, **dadurch gekennzeichnet, dass** die Baugruppe (3) eine von der Baugruppe (3) lösbare Steckkarte (3b) mit einer Auswerteeinheit (18) aufweist, die mit dem Temperatursensor (10) zur Messdatenerfassung elektrisch verbunden ist.

15. Notbeleuchtungs- und/oder Sicherheitsbeleuchtungsanlage mit einer Einrichtung (1) nach einem der Ansprüche 1 bis 14 und mit zumindest einer, insbesondere mehrere, Sicherheits- und/oder Rettungszeichenleuchte (101), die an die Baugruppe (3), insbesondere an zumindest eine Endstromkreisbaugruppe (3a) der Baugruppe (3), elektrisch angeschlossen sind.
